(19) Europäisches Patentamt
European Patent Office
Office européen des brevets

(11) **EP 0 580 942 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(51) Int Cl.⁶: **G09F 9/30**, G02B 6/26

(21) Anmeldenummer: **93103819.4**

(22) Anmeldetag: **10.03.1993**

(54) **Lichtaustrittskörper für faseroptische Lichtleiter**

Light output body for fiber-optic light guides

Elément de sortie de lumière pour guide d'ondes à fibre optique

(84) Benannte Vertragsstaaten:
**AT BE CH DE ES FR GB IT LI NL**

(30) Priorität: **31.07.1992 DE 4225323**

(43) Veröffentlichungstag der Anmeldung:
**02.02.1994 Patentblatt 1994/05**

(73) Patentinhaber:
• **Schott Glas**
**55122 Mainz (DE)**
Benannte Vertragsstaaten:
**BE CH DE ES FR IT LI NL AT**
• **CARL-ZEISS-STIFTUNG trading as Schott Glas**
**55122 Mainz (DE)**
Benannte Vertragsstaaten:
**GB**

(72) Erfinder: **Kriege, Wolfgang**
**W-6500 Mainz (DE)**

(56) Entgegenhaltungen:
EP-A- 0 143 856      WO-A-82/02604
WO-A-87/00907      DE-A- 2 840 535
FR-A- 2 488 709      GB-A- 2 162 335

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft einen Lichtaustrittskörper für eine faseroptische Signalanzeigevorrichtung zum Anzeigen von Verkehrszeichen, welcher zum Ausstrahlen des einem Rasterpunkt in der Anzeigefläche der Vorrichtung über Lichtleiter zugeführten Lichts ein Lichteintrittsende zum Verbinden mit dem zuführenden Ende des zugeordneten Lichtleiters und ein Lichtaustrittsende, welches in der Anzeigefläche die Lichtaustrittsfläche des Rasterpunktes bildet, aufweist, sowie einen lichtleitenden Mittelbereich zwischen Lichteintritts- und Lichtaustrittsende, der sich zum Lichtaustrittsende hin im wesentlichen konisch oder pyramidal aufweitet und bei welchem das Lichtaustrittsende durch einen sich an den Mittelbereich anschließenden, sich im wesentlichen konisch oder pyramidal verjüngenden Verlängerungsabschnitt gebildet wird, durch dessen Mantel- und/oder Endflächen das Licht abgestrahlt wird.

Die DE 24 37 580 C2 beschreibt faseroptische Signalanzeigevorrichtungen zum Ausstrahlung von Lichtzeichen, insbesondere Verkehrszeichen, bei welchen sich das darzustellende Symbol aus einer Vielzahl von Lichtpunkten in der Rasterplatte einer Anzeigefläche zusammensetzt. Die Beleuchtung der Lichtpunkte erfolgt mittels eines oder mehrerer mehrarmiger Lichtleiter, welche an ihrem einen Ende für die gleichzeitige und gemeinsame Beleuchtung mittels einer Lichtquelle bündelartig zusammengefaßt sind und an ihrem anderen Ende in die entsprechenden Öffnungen der Rasterplatte münden. In diesen Öffnungen befinden sich nach der Druckschrift die Lichtaustrittskörper, die aus einem optisch transparenten Material bestehen und im wesentlichen die Gestalt von Kegelstümpfen aufweisen. Sie sind in den Öffnungen so angeordnet, daß ihre Grundflächen die Lichtaustrittsflächen der Rasterpunkte in der Anzeigefläche bilden, ihre Schnittflächen dagegen auf der Rückseite der Rasterplatte zur optischen Ankopplung an die jeweils zugeordneten Lichtleiter dienen.

Die Verwendung im wesentlichen kegelstumpfförmiger Lichtaustrittskörper hat nach der Druckschrift den Vorteil, daß die Abstrahlcharakteristik des Lichtes aus den einzelnen Rasterpunkten dahingehend verbessert wird, daß das abgestrahlte Licht nicht nur stärker gebündelt und damit in Richtung auf den Betrachter eine größere Leuchtdichte erzielt wird; darüber hinaus wird auch noch der Durchmesser eines einzelnen Rasterpunktes im Vergleich zum Durchmesser des ihn versorgenden Lichtleiters vergrößert, so daß er für den Betrachter besser wahrnehmbar ist. Hieraus resultieren nach der Druckschrift eine starke Leuchtkraft und eine hohe Konturenschärfe der ausgestrahlten Lichtsignale, was insbesondere auch bei schlechten Wetterverhältnissen zu einer noch guten Sichtbarkeit der Zeichen führen soll.

Die Abstrahlcharakteristik des bekannten Lichtleitkörpers wird im wesentlichen durch die Geometrie, d.h. die Abmessungen des Kegelstumpfes bestimmt. Auf jeden Fall ist der Abstrahlkegel aber kein scharf begrenztes Gebilde, sondern hat zum Rand hin einen relativ weichen Übergang. Die in kartesischen Koordinaten aufgetragene Winkelverteilung der Energie ähnelt eher einer Gauß'schen Kurve als einer Rechteckfunktion.

Beim Aufstellen der bekannten Signalsysteme auf mehrspurigen Autobahnen sowie bei Installation seitlich der Straße ist es wünschenswert, daß der Abstrahlwinkel breiter ist, als dies für reine Spursignalisation auf Autobahnen erforderlich ist. Der Nachteil bei den beschriebenen Systemen ist jedoch, daß mit dem größeren Abstrahlwinkel die Achslichtstärke überproportional abnimmt. So sinkt zum Beispiel bei einer Aufweitung des Abstrahlwinkels von 6° auf 12° die Achslichtstärke auf 25% ihres ursprünglichen Wertes.

Aus der FR-A-2 488-709, die die Grundlage für den Oberbegriff des Anspruchs 1 bildet, obwohl sie eine völlig andere Verwendung betrifft, ist ein Gerät für farbige Leuchtanzeigen, z.B. farbige Werbeanzeigen oder Leuchtreklamen, bekannt. Dieses Gerät weist eine Reflektorlampe, eine miniaturisierte Empfangs-/Sendevorrichtung mit einem Empfangsschirm, welcher von der Reflektorlampe angestrahlt und auf welchem mit Hilfe eines durchlaufenden Bandes mit kleinen transparenten farbigen Kreisen ein kontinuierlicher Ablauf von rasterartigen Symbolen erzeugt wird, und einen Hauptschirm, der über Lichtleitkabel mit dem Empfangsschirm verbunden ist und auf dem das eigentliche Bild entsteht, auf.

Der Hauptschirm setzt sich aus einer Vielzahl horizontal und vertikal entsprechend dem Raster des Empfangsschirms in einem Schachbrettmuster angeordneten sog. Vorrichtungen zusammen. Diese Vorrichtungen weisen jeweils ein Lichteintrittsende zum Verbinden mit dem zuführenden Ende eines zugeordneten Lichtleiters über welchen das Lichteintrittsende jeweils mit einem Rasterpunkt des Empfangsschirms verbunden ist sowie ein Lichtaustrittsende auf, welches auf dem Hauptschirm die Lichtaustrittsfläche eines Rasterpunktes bildet sowie einen lichtleitenden Mittelbereich zwischen Lichteintritts- und Lichtaustrittsende, der sich zum Lichtaustrittsende hin im wesentlichen konisch oder pyradimal aufweitet. Das Lichtaustrittsende wird jeweils durch einen sich an den Mittelbereich anschließenden, sich im wesentlichen konisch oder pyradimal verjüngenden Verlängerungsabschnitt gebildet wird, durch dessen Mantel- und/oder Endflächen das Licht abgestrahlt wird.

Das auf dem Enpfangsschirm erzeugte Bild wird über die genannten Lichtleiter dem Hauptschirm zugeleitet.

Nach der Druckschrift besteht die Aufgabe einer oben beschriebenen Vorrichtung darin, den jeweils am Ende des zugeordneten Lichtleitkabels erzeugten Lichtpunkt zu vervielfältigen und auf die durch die Flächen des pyradimalen Prismas aufgespannten Projektionsflächen zu projizieren. Insbesondere wird in der Druckschrift erwähnt, daß um so mehr projizierte Lichtpunkte erzeugt werden, je mehr Seitenflächen das pyradimale Prisma aufweist.

Das Gesamtbild auf dem Hauptschirm wird damit rasterartig aus den abgebildeten Lichtpunkten auf den beleuchteten Projektionsschirmen aufgebaut.

Bei der in der FR-A beschriebenen Vorrichtung handelt es sich somit um einen als pyradimales Prisma ausgebildeten Schirm, der, damit die einzelnen Leuchtpunkte zu einem kontinuierlichen Gesamtbild verschmelzen, diffus in alle Richtungen abstrahlt.

Von dem aus der eingangs erwähnten DE 24 37 580 C2 bekannten Lichtaustrittskörper unterscheidet sich die in der FR-A beschriebene Vorrichtung im wesentlich dadurch, daß sie den oben beschriebenen Verlängerungsabschnitt aufweist, durch welchen das Licht diffus abgestrahlt wird.

Aufgabe der Erfindung ist, einen Lichtaustrittskörper für eine faseroptische Signalanzeigevorrichtung zum Anzeigen von Verkehrszeichen bereitzustellen, welcher bei starker Leuchtkraft und hoher Konturenschärfe einen gegenüber dem aus der DE 24 37 580 C2 bekannten Lichtaustrittskörper vergrößerten Abstrahlwinkel aufweist bei gleichmäßig hoher Lichtstärke über den gesamten Winkelbereich.

Diese Aufgabe wird mit einem Lichtaustrittskörper mit allen Merkmalen des Patentanspruchs 1 gelöst.

Es hat sich in überraschender Weise gezeigt, daß sich bei einem Lichtaustrittskörper, der von seiner Gestalt her prinzipiell der aus der FR-A bekannten Vorrichtung ähnelt, allein durch geeignete Wahl der Abmessungen eine völlig andere Abstrahlcharakteristik erzielen läßt, insbesondere eine solche Abstrahlcharakteristik, die alle in der obigen Aufgabe beschriebenen hohen Anforderungen an einen Lichtaustrittskörper für eine faseroptische Signalanzeigevorrichtung zum Anzeigen von Verkehrszeichen erfüllt, wie z.B. starke Leuchtkraft, hohe Konturenschärfe, breiter Abstrahlwinkel bei gleichmäßig hoher Leuchtdichte über den gesamten Winkelbereich, d.h. insbesondere auch steilem Abfall der Lichtstärke am Rande des wirksamen Winkelbereichs. Alle diese Vorteile weist eine erfindungsgemäß ausgestalteter Lichtaustrittskörper auf.

Dieses Ergebnis ist insbesondere auch deshalb unerwartet, als sich nach außen hin verjüngende Austrittsenden bei Lichtleitern üblicherweise dann eingesetzt werden, wenn eine Fokussierung des ausgestrahlten Lichts im Nahbereich erreicht werden soll, was zwangsläufig zu einer Divergenz der Lichtstrahlen im Fernbereich führt. Ein ähnlicher Effekt wird ja auch bei der Vorrichtung der FR-A eingesetzt.

Der mittlere Bereich des erfindungsgemäßen Lichtaustrittskörpers, in welchem das Licht vom Eintritts- zum Austrittsende geführt wird, erweitert sich, wie auch im Falle der Vorrichtung aus der FR-A, im wesentlichen konisch oder pyramidal zum Austrittsende hin. Dies bedeutet, daß nicht nur die bevorzugte Kegelstumpfgestalt des Mittelbereiches zu der erfindungsgemäßen Wirkung führt, sondern auch andere geometrische Formen, die der Kegelstumpfgestalt nahe kommen, wie z.B. ein Pyramidenstumpf mit regelmäßigem oder unregelmäßigem Vieleck als Grundfläche, ein Kegelstumpf mit runder Schnittfläche, aber mit einer Grundfläche mit beliebiger Gestalt, z.B. zur Erzielung einer gewünschten Asymmetrie in der Winkelverteilung der Strahlung, u.a.. Letzteres kann wünschenswert sein, wenn man eine Winkelverteilung des abgestrahlten Lichts erzielen will, die nicht rotationssymmetrisch ist. Dies kann zum Beispiel der Fall sein, wenn bei einer erfindungsgemäßen Signalanzeigevorrichtung der Abstrahlwinkel in horizontaler Richtung verhältnismäßig breit, in vertikaler Richtung aber auf die Augenhöhe eines Beobachters beschränkt bleiben soll, wodurch Lichtverluste nach oben und unten vermieden werden sollen. In einem solchen Fall muß die Querschnittsfläche am Lichtaustrittsende des mittleren Bereiches in vertikaler Richtung einen größeren Durchmesser aufweisen als in horizontaler Richtung. Die geometrische Form kann hierbei im einzelnen ganz den Erfordernissen angepaßt werden, wie z.B. der Aufteilung der Rasterplatte für die Signalanzeige. Die Gestalt der Grundfläche des sich anschließenden Verlängerungsabschnitts ist entsprechend anzupassen.

Des weiteren sollen durch den Begriff "im wesentlichen" auch solche Körper in die Erfindung einbezogen sein, deren Gestalt fertigungstechnisch bedingt von der mathematisch exakten Kegel- oder Pyramidenstumpfgestalt geringfügig abweicht.

Keinesfalls in die Erfindung einbezogen sind Körper, wie sie aus der DE-OS 2 240 780 bekannt sind. Die DE-OS 2 240 780 betrifft eine Lichtaustrittszelle für optische Faserlichtleiter, die aus einem massiven, aus optisch durchlässigem Material hergestellten Rotationsparaboloid besteht, in dessen Brennpunkt die Enden der ankommenden Faserlichtleiter befestigt, z.B. eingegossen sind und dessen Oberfläche als Totalreflektor wirkt. Bei einer solchen Ausbildung ergibt sich eine ungünstige Leuchtdichtenverteilung, da in der Nähe der optischen Achse eine unerwünschte Leuchtdichtenspitze auftritt, die man, wie aus den Figuren 2 und 3 der Druckschrift hervorgeht, durch eine Streuscheibe oder Linse abzubauen versucht. Dieser Nachteil läßt sich auch nicht durch einen sich nach außen hin verjüngenden Verlängerungsabschnitt am Austrittsende der Lichtaustrittszelle überwinden.

Die beste Abstrahlcharakteristik im obigen Sinne erhält man mit einem erfindungsgemäßen Lichtaustrittskörper, der einen kegelstumpfförmigen Mittelbereich aufweist, an den sich ein sich konisch verjüngender Verlängerungsabschnitt anschließt. Daneben sind aber auch Ausführungsformen denkbar, bei welchen der Verlängerungsabschnitt eine Pyramide, ein Kegel- oder Pyramidenstumpf oder ein ähnliches Gebilde darstellt. Überraschenderweise läßt sich die erfindungsgemäße Wirkung nicht mit einem Verlängerungsabschnitt erzielen, der die Gestalt eine plankonvexen Linse, wie sie in Figur 3 der DE-OS 2 240 780 dargestellt ist, hat.

Der Lichtaustrittskörper nach der Erfindung besteht aus einem optisch transparenten Material, wie z.B. Glas oder Kunststoff. Bevorzugt besteht er aus einem Kunststoff und wird einstückig in einem Spritzgußverfahren hergestellt.

Nachfolgend wird die Erfindung anhand der Figuren und eines Ausführungsbeispiels näher erläutert:

Es zeigen:

Figur 1  in einer schematischen Längsschnittdarstellung einen aus dem Stand der Technik bekannten, als Kegelstumpf ausgebildeten Lichtaustrittskörper mit planer Lichtaustrittsfläche

Figur 2  in der gleichen Darstellungsweise einen erfindungsgemäßen Lichtaustrittskörper nach einer bevorzugten Ausführungsform mit einem kegelstumpfförmigen Mittelbereich und einem konusförmigen Verlängerungsabschnitt

Figur 3  zur Verdeutlichung der Verbesserung der Abstrahlcharakteristik durch die Erfindung ein Diagramm, in welchem für einen bekannten und einen erfindungsgemäßen Lichtaustrittskörper die Lichtstärkeverteilung über dem Abstrahlwinkel aufgetragen ist.

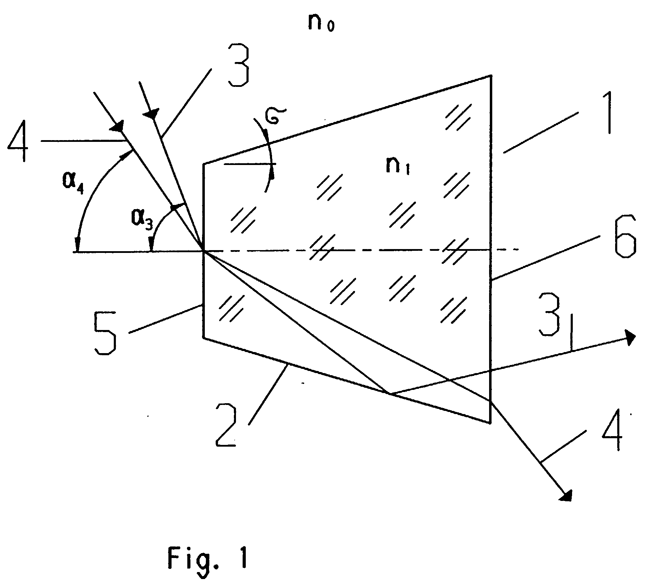

In Figur 1 ist ein bekannter, als Kegelstumpf ausgebildeter Lichtaustrittskörper (1) zu sehen. Der Lichtaustrittskörper besteht aus einem optisch transparenten Material, beispielsweise aus Glas oder Kunststoff und besitzt eine Brechzahl $n_1$, die größer sein muß, als die Brechzahl $n_o$ des umgebenden Mediums, um eine Totalreflexion der von innen auf die Mantelfläche (2) des Kegelstumpfes auftreffenden Lichtstrahlen zu bewirken. Man erkennt in Figur 1 Lichtstrahlen (3) und (4), die z.B. aus einem Lichtleiter unter Winkeln $\alpha_3$ und $\alpha_4$ zur Flächennormalen auf die Schnittfläche (5) des Kegelstumpfes auftreffen. Der Lichtstrahl (3) wird an der Mantelfläche (2) des Kegelstumpfes reflektiert und verläßt nahezu parallel zur optischen Achse des Körpers die Lichtaustrittsfläche (6). Der Lichtstrahl (4) trifft dagegen unter einem kleineren Winkel, d.h. $\alpha_4 < \alpha_3$, auf die Schnittfläche auf und wird so weit zur Achse hin gebeugt, daß er ohne Reflexion an der Mantelfläche den Lichtustrittskörper (1) durch die Lichtaustrittsfläche (6) wieder verläßt. Dadurch, daß der Lichtstrahl (4) durch den Lichtaustrittskörper (1) lediglich eine Parallelverschiebung, aber keine Richtungsänderung erfährt, verläßt er die Lichtaustrittsfläche (6) unter großen Winkeln und trägt zu dem flachen Abfall der Lichtstärkeverteilungskurve zu großen Winkeln hin bei.

Demgegenüber werden Lichtstrahlen, die wie der Lichtstrahl 3 unter einem Winkel auf die Schnittfläche (5) fallen, der groß genug ist, daß der Strahl an der Mantelfläche (2) reflektiert wird, parallelisiert bzw. gebündelt, wodurch es zu der bereits erwähnten Erhöhung der Leuchtdichte bei gleichzeitiger Vergrößerung der Lichtaustrittsfläche kommt.

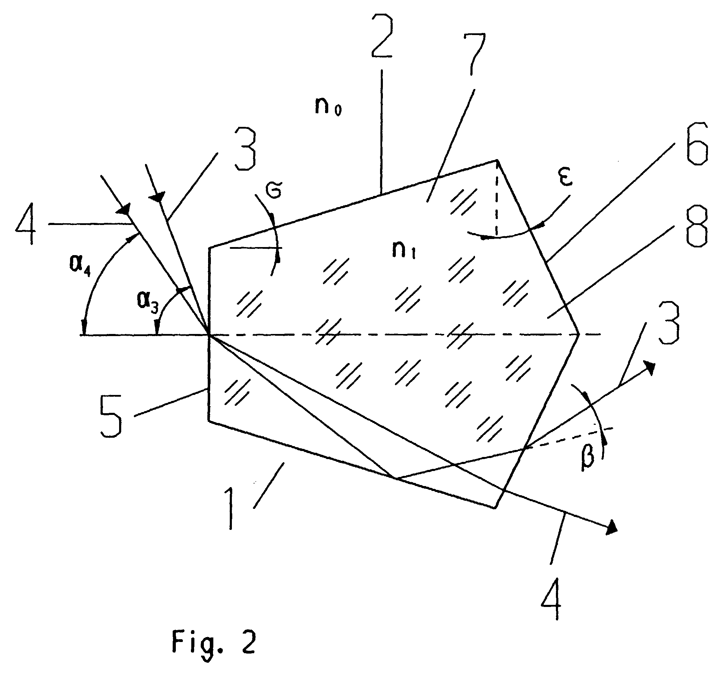

In Figur 2 ist ein Lichtaustrittskörper nach der Erfindung dargestellt. Der Lichtaustrittskörper (1) setzt sich aus einem kegelstumpfförmigen mittleren Bereich (7), in welchem das Licht vom Lichteintrittsende mit der Schnittfläche (5) zum Lichtaustrittsende mit dem Verlängerungsabschnitt (8) geführt wird, und dem kegelförmigen Verlängerungsabschnitt (8) zusammen. Wie in Figur 1 fallen Lichtstrahlen (3) und (4) unter Winkeln $\alpha_3$, $\alpha_4$ auf die Schnittfläche (5) des Lichtaustrittskörpers (1). Lichtstrahl (3) erfährt eine Totalreflexion an der Mantelfäche 2 des Kegelstumpfes (7) und an der durch die Mantelfläche des angesetzten Kegels gebildeten Lichtaustrittsfläche (6) eine weitere Umlenkung in Richtung auf die Achse hin. Lichtstrahl (4), der unter einem so kleinen Winkel zur Flächennormalen auf die Schnittfläche (5) auftrifft, daß er den Kegelstumpf ungehindert durchläuft, trifft unter einem sehr kleinen Winkel zur Flächennormalen auf die nunmehr geneigte Lichtaustrittsfläche (6) und erfährt dadurch auch eine nur geringe Richtungsänderung nach Austritt aus dem Lichtausstrahlkörper von der Achse weg. Man erkennt an diesem Beispiel, daß mit einem erfindungsgemäßen Lichtaustrittskörper auch solche Strahlen dem wirksamen Winkelbereich zugeführt werden, die bei einem Lichtaustrittskörper nach dem Stand der Technik in unwirksame Randbereiche abgestrahlt werden.

Wie aus dem Stand der Technik bekannt, läßt sich ein Schutz der Reflexionsfläche, d.h. der Mantelfläche (2) des Kegelstumpfes dadurch erzielen, daß sie mit einer Schicht aus einem Material mit niedrigerem Brechungsindex überzogen wird.

Wie bereits eingangs erwähnt, wird die Abstrahlcharakteristik eines erfindungsgemäßen Lichtaustrittskörpers durch seine Geometrie, d.h. seine Abmessungen und Winkel, wie auch durch die Abstrahlcharakteristik des zuführenden Lichtleiters und die geometrische Anordnung von Lichtleiter und Lichtaustrittskörper relativ zueinander bestimmt. Die den jeweiligen Anforderungen am besten gerecht werdende Geometrie läßt sich wegen der Komplexität der Einflußgrößen am einfachsten durch Einzelstrahlintegration berechnen oder durch einfache Routineexperimente auffinden.

In einem Ausführungsbeispiel werden für einen Lichtaustrittskörper nach dem Stand der Technik und einen erfindungsgemäßen Lichtaustrittskörper die Messungen der Lichtstärkeverteilungen in Abhängigkeit vom Ausstrahlwinkel angegeben. Es wurden Abmessungen für die Lichtaustrittskörper gewählt, wie sie für die wichtigste Anwendung, nämlich in einer Signalanzeigevorrichtung für Verkehrszeichen, gebräuchlich sind.

Die Abmessungen des Lichtaustrittskörpers nach dem Stand der Technik waren:

| Durchmesser der Lichteintrittsfläche | 1,5 mm |
|---|---|
| Durchmesser der Lichteintrittsfläche | 4,0 mm |
| Länge des Lichtaustrittskörpers | 18,5 mm |

Die Abmessungen des Lichtaustrittskörpers nach der Erfindung waren:

| Durchmesser der Lichteintrittsfläche | 1,5 mm |
|---|---|
| Durchmesser der Lichteintrittsfläche | 4,0 mm |
| Länge des Lichtaustrittskörpers | 18,5 mm |
| Basiswinkel ε des Kegels der Lichteintrittsfläche | 8,5° |

Die Winkelverteilung des Lichts in der Eintrittsebene war für beide Lichtaustrittskörper gleich (Halbwertsbreits des Lichtstrahlkegels ca. ± 20°).

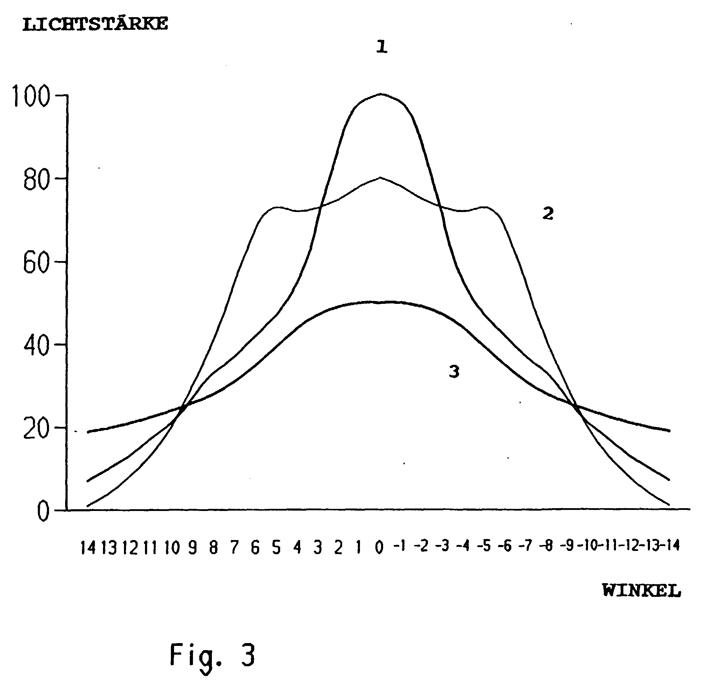

Die gemessenen Lichtstärke-Verteilungskurven zeigt Figur 3. Mit (1) ist die Lichtstärkeverteilung des Lichtaustrittskörpers nach dem Stand der Technik, mit (2) die des erfindungsgemäßen Lichtaustrittskörpers bezeichnet. Man erkennt, daß die Lichtstärkeverteilungskurve des bekannten Lichtaustrittskörpers einer Gauß-Verteilung mit flach abfallenden Flanken ähnelt, wobei sich das Maximum der Lichtstärke über einen sehr engen Winkelbereich von nur ± 3° erstreckt. Eine solche Lichtstärkenverteilung ist beispielsweise bei einem Lichtaustrittskörper für eine Signalanzeigevorrichtung für Verkehrszeichen wünschenswert, welche zur reinen Spursignalisation auf der Autobahn dient.

Die Lichtstärkeverteilungskurve des erfindungsgemäßen Lichtaustrittskörpers zeichnet sich dagegen durch eine hohe gleichmäßige Lichtstärke über einen Winkelbereich von ± 6° aus. Die Flanken der Kurve fallen steil fast bis auf Null ab. Hieraus resultiert eine hohe Lichtstärke über einen breiteren Winkelbereich, wodurch der erfindungsgemäße Lichtaustrittskörper insbesondere für Signalanzeigevorrichtungen für Verkehrszeichen für mehrspurige Autobahnen oder bei Installation seitlich der Straße geeignet ist.

Zur Gegenüberstellung zeigt Figur 3 noch eine Lichtstärkeverteilung (3), die unter der Vorgabe, daß sie die gleiche Halbwertsbreite wie die Lichtstärkeverteilungskurve (2) des erfindungsgemäßen Lichtaustrittskörpersbesitzen soll, für einen Lichtaustrittskörper nach dem Stand der Technik ermittelt worden ist. Die Daten dieses bekanten Lichtaustrittskörpers sind:

| Durchmesser der Lichteintrittsfläche | 1,5 mm |
|---|---|
| Durchmesser der Lichteintrittsfläche | 4,0 mm |
| Länge des Lichtaustrittskörpers | 10 mm |

Man erkennt den durch die Verbreiterung des Abstrahlwinkels verursachten starken Abfall der Lichtstärke in Achsennähe und die sehr flach auslaufenden Flanken der Kurve. Eine solche Lichtstärkeverteilung führt zu geringer Erkennbarkeit für den Betrachter und verteilt Licht in Winkelbereiche, die vom Betrachter nicht mehr genutzt werden.

Bei Berechnungen der Lichtstärkeverteilungen können für die meridionalen Strahlen die folgenden Beziehungen zwischen Eintritts- und Austrittswinkel zugrunde gelegt werden:

1. Strahl ohne Reflexion an der Kegelstumpfmantelfläche

1.1. Kegelstumpf mit planer Austrittsfläche

$$\beta = a$$

1.2. Kegelstumpf mit kegelförmiger Austrittsfläche

$$\beta = \varepsilon \cdot \arcsin (n_1/n_o \, {}^* \sin (\varepsilon \cdot \sin (n_o \, {}^* \sin \alpha / n_1)))$$

2. Strahlen mit Reflexion an der Kegelstumpfmantelfläche

2.1. Kegelstumpf mit planer Austrittsfläche

$$\beta = \arcsin (n_1/n_o * \sin (2 * \sigma - \arcsin (n_o * \sin \alpha / n_1)))$$

2.2. Kegelstumpf mit kegelförmiger Austrittsfläche

$$\beta = \varepsilon - \arcsin (n_1/n_o * \sin (\varepsilon - (2*\sigma - \arcsin (n_o * \sin \alpha/n_1)))$$

In den Formeln bedeutet

$\beta$ =     Austrittswinkel
$\alpha$ =     Eintrittswinkel
$\varepsilon$ =     Basiswinkel des Kegels der Austrittsfläche
$n_1$ =     Brechwert des Kegelmaterials
$n_o$ =     Brechwert des umgebenden Mediums
$\sigma$ =     Winkel des Kegelstumpfes gegen die Systemachse

Da bei der Wirkungsweise eines solchen Kegelsystems nicht nur die Meridionalstrahlen, sondern auch alle übrigen Strahlen einen wesentlichen Anteil haben, kann die Berechnung eines solchen Systems unter Berücksichtigung der das System beeinflussenden Parameter, nur mit komplizierten Rechnerprogrammen durchgeführt werden, indem man mit statistischen Mitteln eine Strahlintegration betreibt.

**Patentansprüche**

1.   Lichtaustrittskörper für eine faseroptische Signalanzeigevorrichtung zum Anzeigen von Verkehrszeichen,

    welcher zum Ausstrahlen des einem Rasterpunkt in der Anzeigefläche der Vorrichtung über Lichtleiter zugeführten Lichts ein Lichteintrittsende zum Verbinden mit dem zuführenden Ende des zugeordneten Lichtleiters und
ein Lichtaustrittsende, welches in der Anzeigefläche die Lichtaustrittsfläche des Rasterpunktes bildet, aufweist sowie
einen lichtleitenden Mittelbereich zwischen Lichteintritts- und Lichtaustrittsende, der sich zum Lichtaustrittsende hin im wesentlichen konisch oder pyramidal aufweitet,
und bei welchem
das Lichtaustrittsende durch einen sich an den Mittelbereich anschließenden, sich im wesentlichen konisch oder pyramidal verjüngenden Verlängerungsabschnitt (8) gebildet wird, durch dessen Mantel- und/oder Endflächen das Licht abgestrahlt wird,

    **dadurch gekennzeichnet,**

    daß die Abmessungen von Lichteintrittsende (5), Mittelbereich (7) und Verlängerungsabschnitt (8) so gewählt sind, daß der Abstrahlwinkel gegenüber einem Lichtaustrittskörper ohne Verlängerungsabschnitt (8) verbreitert ist, mit einer über den gesamten, wirksamen Winkelbereich gleichmäßig hohen Lichtstärke, die außerhalb des wirksamen Winkelbereichs zu hohen Winkeln hin steil abfällt.

2.   Lichtaustrittskörper nach Anspruch 1,
    **dadurch gekennzeichnet,**
    daß der das Licht führende Mittelbereich (7) des Lichtaustrittskörpers (1) die Gestalt eines Kegelstumpfes und der Verlängerungsabschnitt (8) die Gestalt eines an den Kegelstumpf angesetzten Konus aufweist.

3.   Lichtaustrittskörper nach Anspruch 1 oder 2,
    **dadurch gekennzeichnet,**
    daß er aus einem Kunststoff besteht.

4.   Lichtaustrittskörper nach Anspruch 3,
    **dadurch gekennzeichnet,**
    daß er einstückig ist und mittels eines Spitzgußverfahrens hergestellt ist.

**Claims**

1. Light output element for a fibre-optic signal display device for displaying road signs, which, in order to emit the light fed into a pixel in the display face of the device via light guides, has a light input end for connecting to the feed-in end of the associated light guide and a light output end which forms the light output face of the pixel in the display face, and a light-guiding central region between the light input and the light output end, which region widens towards the light output end in an essentially conical or pyramidal shape, and in which the light output end is formed by an extension section (8) which adjoins the central region and tapers essentially in a conical or pyramidal shape and by whose outer faces and/or end faces the light is irradiated, characterized in that the dimensions of the light input end (5), central region (7) and extension section (8) are selected such that the irradiation angle is widened in comparison with a light output element without an extension section (8), with a light intensity which is of uniform magnitude over the entire effective angular region and which drops steeply away outside the effective angular region towards acute angles.

2. Light output element according to Claim 1, characterized in that the central region (7), which conducts the light, of the light output element (1) is in the shape of a truncated cone and the extension section (8) is in the shape of a cone which is attached to the truncated cone.

3. Light output element according to Claim 1 or 2, characterized in that it is composed of a plastic.

4. Light output element according to Claim 3, characterized in that it is in one piece and is manufactured by means of an injection moulding method.

**Revendications**

1. Elément de sortie de lumière pour un dispositif d'affichage de signaux à fibres optiques destiné à l'affichage de signaux routiers, qui comprend, pour l'émission de la lumière amenée par des guides de lumière à un point de réseau dans la face d'affichage du dispositif, une extrémité d'entrée de lumière pour la connexion avec l'extrémité d'amenée du guide de lumière afférent, et une extrémité de sortie de lumière qui forme, dans la face d'affichage, la face de sortie de lumière du point de réseau, ainsi qu'un domaine médian conducteur de la lumière entre l'extrémité d'entrée et l'extrémité de sortie de lumière, qui s'évase sensiblement en cône ou en pyramide vers l'extrémité de sortie de lumière, et dans lequel l'extrémité de sortie de lumière est formée par une section de prolongement (8) qui s'effile sensiblement en cône ou en pyramide et se raccorde au domaine médian, par les faces d'enveloppe et/ou d'extrémité de laquelle la lumière est émise,
**caractérisé en ce que** les dimensions de l'extrémité d'entrée de lumière (5), du domaine médian (7) et de la section de prolongement (8) sont choisies de façon à ce que l'angle d'émission soit élargi par rapport à un élément de sortie de lumière sans section de prolongement (8), avec, dans tout le domaine angulaire actif, une intensité lumineuse uniformément haute qui diminue abruptement vers les grands angles en dehors du domaine angulaire actif.

2. Elément de sortie de lumière suivant la revendication 1, **caractérisé en ce que** le domaine médian conducteur de la lumière (7) de l'élément de sortie de lumière (1) présente la forme d'un tronc de cône et la section de prolongement (8) présente la forme d'un cône adapté au tronc de cône.

3. Elément de sortie de lumière suivant la revendication 1 ou 2, **caractérisé en ce qu'**il consiste en une matière plastique.

4. Elément de sortie de lumière suivant la revendication 3, **caractérisé en ce qu'**il est monobloc et fabriqué par moulage par injection.

Fig. 1

Fig. 2

Fig. 3